# EUROPEAN PATENT SPECIFICATION

(11) **EP 2 591 963 B1**
(45) Date of publication and mention of the grant of the patent: **11.06.2014**
(21) Application number: 12192173.8
(22) Date of filing: 12.11.2012
(51) Int. Cl.: B60T 11/10

(54) **Device for braking a trailer**
Vorrichtung zum Bremsen eines Anhängers
Dispositif de freinage pour remorque

(30) Priority: 11.11.2011 IT MO20110288
(43) Date of publication of application: 15.05.2013
(73) Proprietor: Studio Tecnico 6 M S.R.L., 41123 Modena (IT)
(72) Inventor: Mamei, Andrea, 41123 Modena (IT); Mamei, Enrico, 41123 Modena (IT); Mamei, Eronne, 41123 Modena (IT)
(74) Representative: Brunacci, Marco

(56) References cited:
- CN-Y- 2 516 409
- DE-A1- 19 514 733
- SU-A1- 1 320 105

## Description

The present invention relates to a device for braking a trailer.

It is known that in the case of a trailer towed by a prime mover, their braking systems are operatively linked so that when the operator brakes the prime mover this also causes the braking of the towed trailer.

The braking system of the trailer is therefore piloted by the braking system of the prime mover for the purpose of synchronizing the braking forces acting on these.

More in particular, the prime movers of known type comprise a braking valve, having a relative valve body inside which a braking piston is housed piloted by the braking system of the prime mover itself and suitable for conveying fluid under pressure into the braking system of the trailer.

More in particular, the valve body comprises a braking chamber inside which is fitted the braking piston and comprises a piloting chamber communicating with the braking system of the prime mover, inside which a piloting piston is fitted sliding. By effect of the increase in pressure in the piloting chamber, the piloting piston moves towards the braking piston to cause its movement. To move the braking piston from its idle configuration, the piloting piston must also compress one or more return springs which act on the braking piston itself to regulate the braking pressure.

It follows therefore, that as soon as the operator operates the brake pedal of the prime mover, this acts on the wheels of the prime mover and, by means of the braking valve, on the braking system of the trailer.

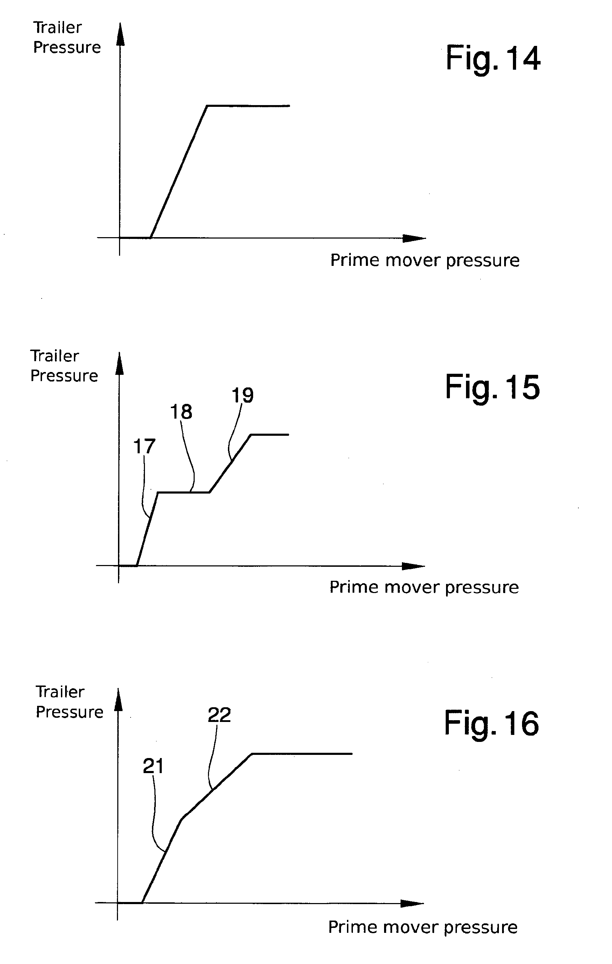

The braking devices of a trailer of known type do have a number of drawbacks. It is in fact known, as shown in the diagram represented in figure 14 and relating to the pressure pattern in the braking system of the trailer in accordance with that in the braking system of the relative prime mover, that the pressure in the trailer increases with a certain delay compared to that of the prime mover. Such delay is due in particular to the force required to operate the brakes of the trailer, i.e., the force needed to move the braking piston and therefore to win the resistance of the springs acting on it besides the internal friction.

The different behaviour of the prime mover and of the trailer is also accentuated by the fact that, when the operator raises his/her foot from the accelerator pedal of the prime mover, there is a deceleration of the prime mover itself considerably greater than that of the trailer, which thus applies a thrust action on the prime mover.

Due to this delay in activating the trailer brakes, it could occur that, in the case of the brakes of the prime mover being activated with a low-intensity force, the trailer does not brake or brakes too weakly.

To overcome this drawback, braking pistons of large diameters are generally used, in order to have a ready response of the trailer braking system, which however give rise to sharp braking in the case of medium-intensity braking pressures.

In other cases, for example when lightweight trailers are used, it can occur that the braking force of the trailer is too intense and sudden.

DE 195 14 733 A1 discloses a brake valve with a valve casing containing a control piston for connecting a pump connection to a brake connection or a tank connection. The piston is held in its basic position by a control spring. A spring system on the other control side of the piston is tensioned according to a pilot pressure. The spring system is received in the valve casing without pre-tension when the control piston is in its basic position and the spring system may have only one pressure spring.

The main object of the present invention is to provide a braking device for trailers which allows obtaining a ready response of the trailer brakes following the braking of the relative prime mover.

Within this aim, one object of the present invention is to optimize the relationship between the braking pressure of the prime mover and that of the trailer, at both high and low braking rates, so as to avoid an unbalance of the braking speeds and, therefore, an incorrect distribution of the forces at play. One object of the present invention is to permit a ready response of the trailer brakes and, at the same time, the gradual braking of the trailer itself.

Yet another object of the invention is to achieve the aim and the objects mentioned above without the direct aid of electronic devices, so as to reduce the cost of the braking device itself.

Another object of the present invention is to provide a device for braking a trailer that allows to overcome the mentioned drawbacks of the background art in the ambit of a simple, rational, easy, effective to use and low cost solution. The above objects are achieved by the present device for braking a trailer, comprising:
a braking valve which can be connected to the braking system of a trailer and having an internally hollow containment body which has at least a delivery port of a work fluid, at least a discharge port of the work fluid, at least a braking port connectable to the braking system of the trailer and at least a piloting mouth connectable to the braking system of the towing vehicle, wherein inside said body are housed sliding
at least a braking piston, moving between an idle configuration and at least a braking configuration in which it is moved with respect to the idle configuration to convey a work fluid to the braking system of the trailer, main elastic means being provided acting on said braking piston;
and a piloting piston moving, due to the pressure present in the braking system of the vehicle, between an idle configuration and a piloting configuration in which it is moved towards said braking piston to push it towards a braking configuration;
characterized by the fact that said piloting piston has at least a first and a second portion with respective thrust areas and moving the one with respect to the other to apply forces of different intensity on said braking piston.

Other characteristics and advantages of the present invention will become more evident from the description of a preferred, but not sole, embodiment of a device for braking a trailer, illustrated purely as an example but not limited to the annexed drawings in which:

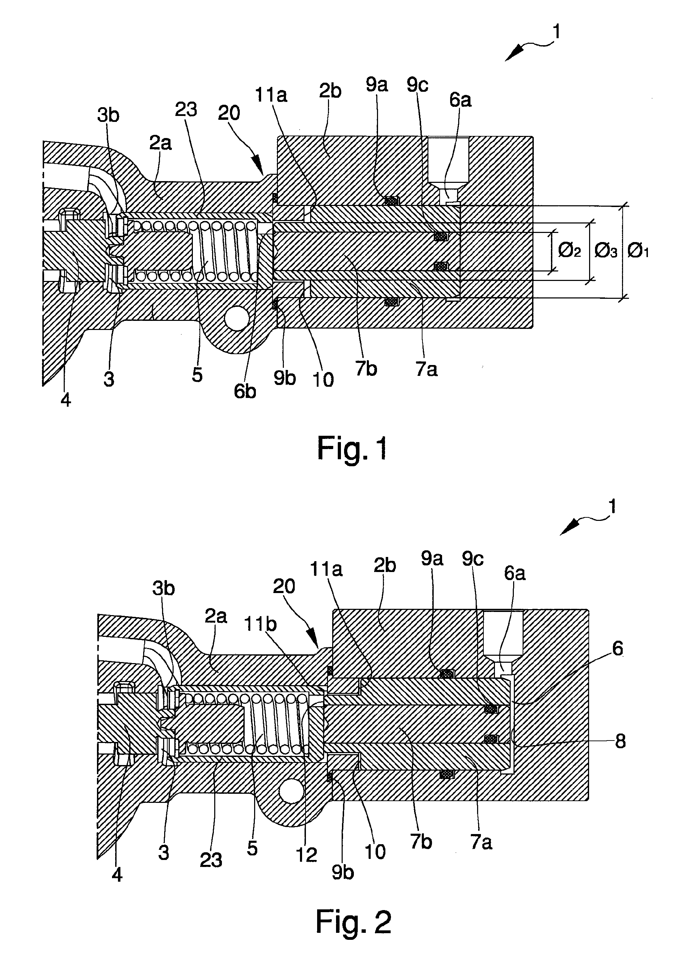

Figure 1 is a section view of a braking device according to the invention, in a first embodiment and in the idle configuration;
Figure 2 is a section view of the device of figure 1 in the configuration of braking start;

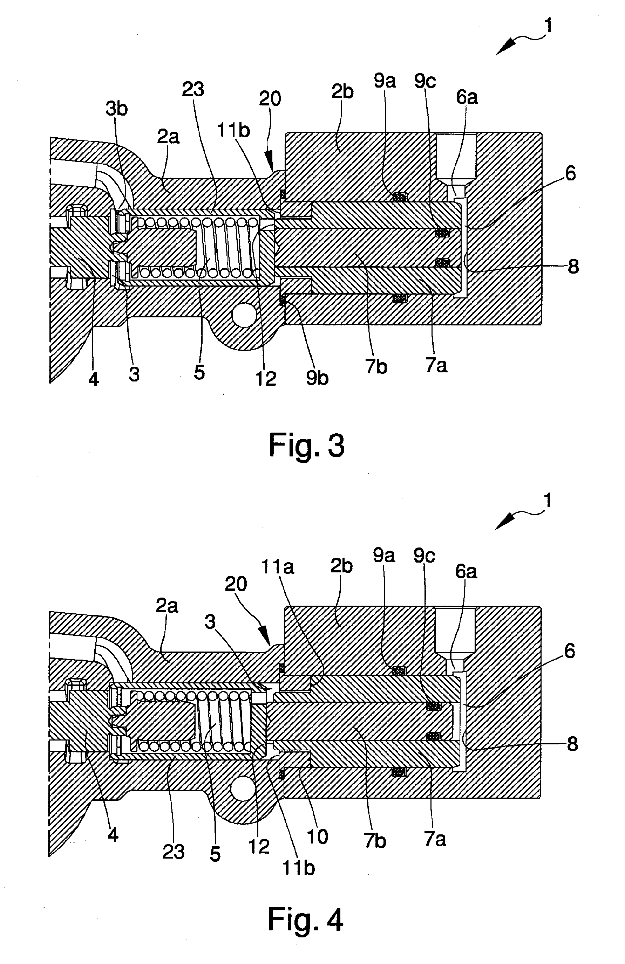

Figure 3 is a section view of the device of figure 1 with the first portion of the piloting piston in the end-of-stroke configuration;
Figure 4 is a section view of the device of figure 1 in the configuration of maximum pressure applied by the piloting piston on the braking piston;

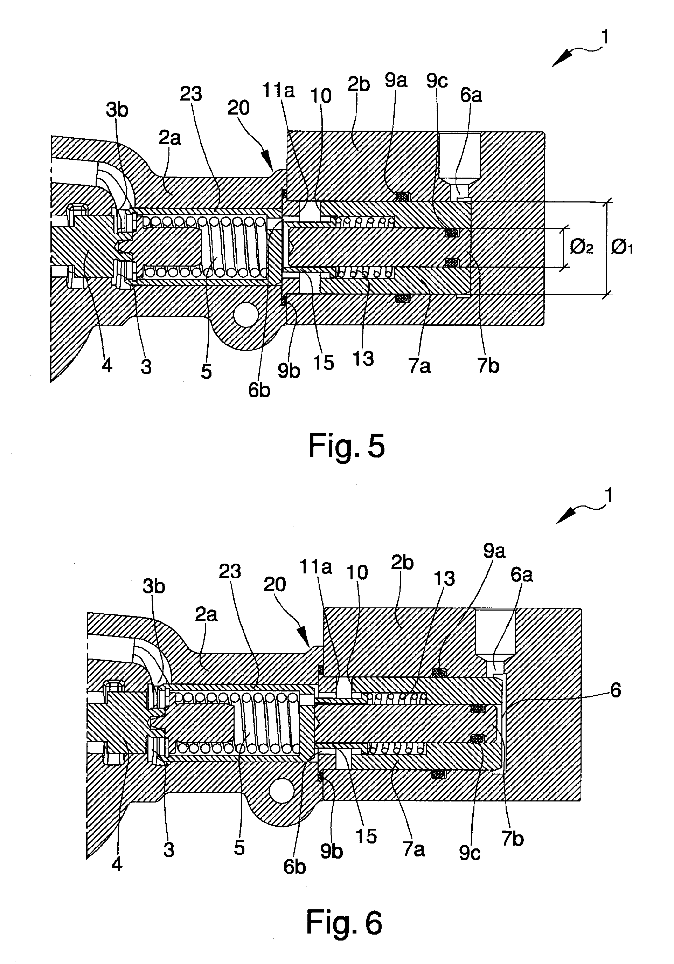

Figure 5 is a section view of a braking device according to the invention, in a second embodiment and in the idle configuration;
Figure 6 is a section view of the device of figure 5 in the configuration of braking start;

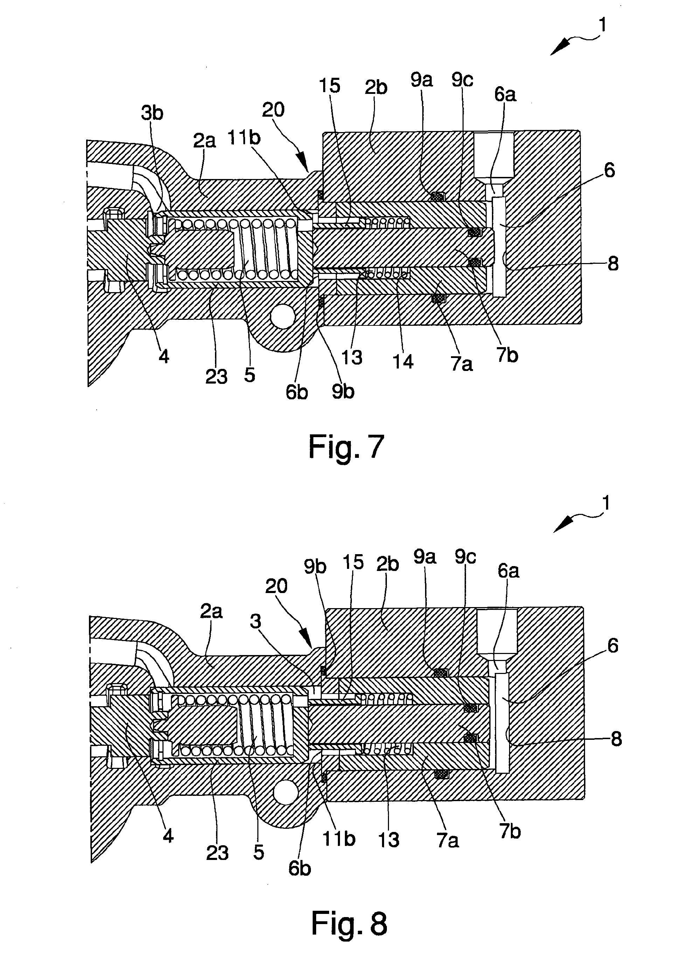

Figure 7 is a section view of the device of figure 5 with the first portion of the piloting piston in the end-of-stroke configuration;
Figure 8 is a section view of the device of figure 5 in the configuration of maximum pressure applied by the piloting piston on the braking piston;

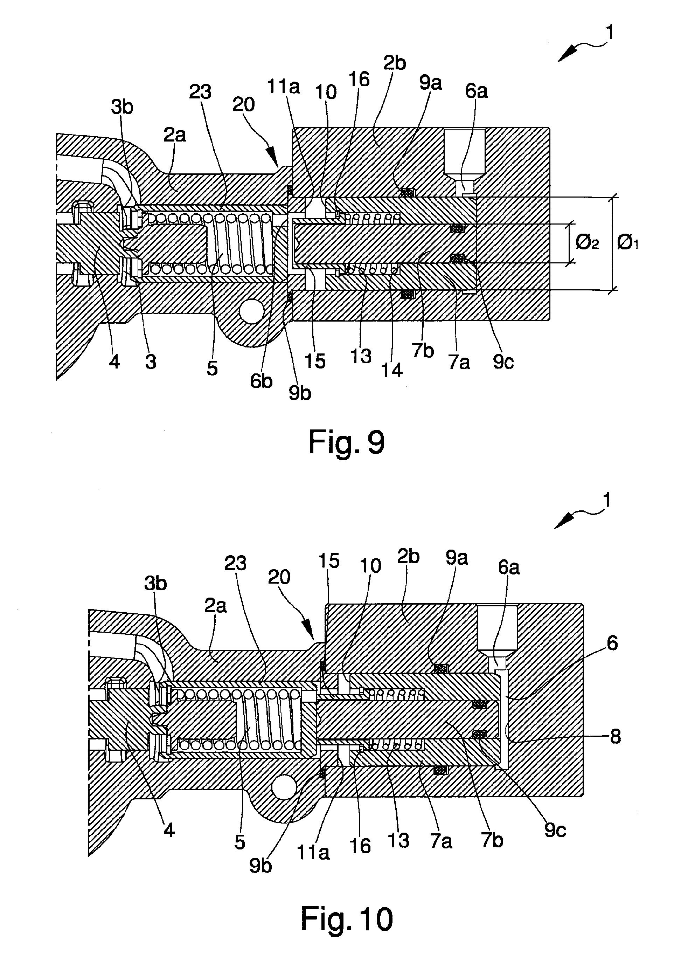

Figure 9 is a section view of a braking device according to the invention, in a third embodiment and in the idle configuration;
Figure 10 is a section view of the device of figure 9 in the configuration of braking start;

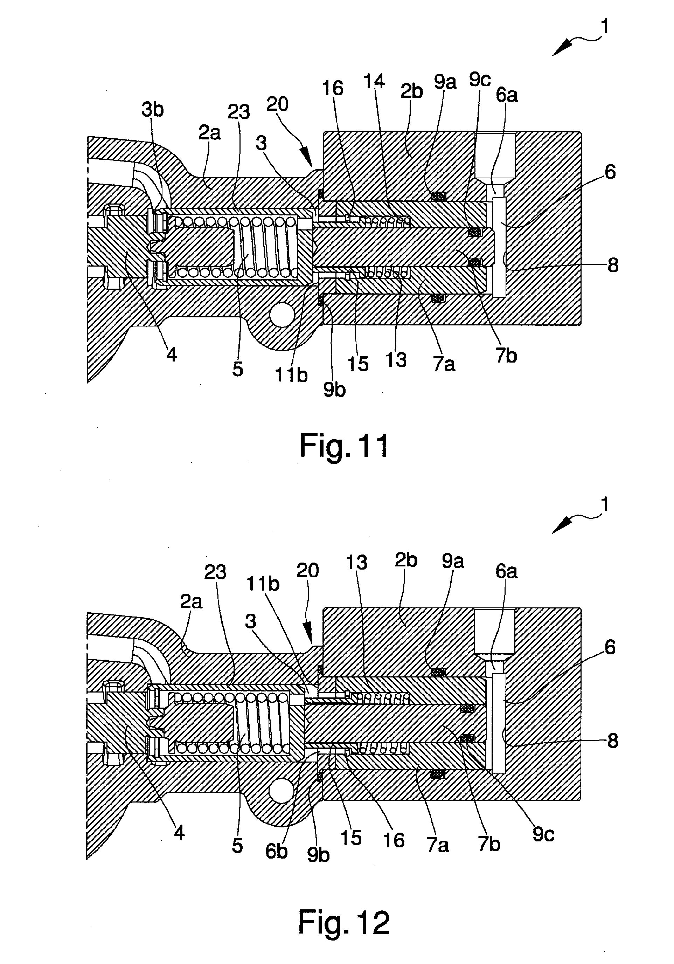

Figure 11 is a section view of the device of figure 9 with the first portion of the piloting piston in the end-of-stroke configuration;
Figure 12 is a section view of the device of figure 9 in the configuration of maximum pressure applied by the piloting piston on the braking piston;
Figure 13 is a section overall view of the braking device according to the invention, in the third embodiment and in the idle configuration;
Figure 14 is a diagram which shows the pressure pattern in the braking system of the trailer according to the pressure in the braking system of the towing vehicle in the devices of known type;
Figure 15 is a diagram which shows the pressure pattern in the braking system of the trailer according to the pressure in the braking system of the towing vehicle in the first embodiment of the device according to the invention;
Figure 16 is a diagram which shows the pressure pattern in the braking system of the trailer according to the pressure in the braking system of the towing vehicle in the second and third embodiments of the device according to the invention.

With particular reference to such figures, globally indicated by 1 is a device for braking a trailer.

The device 1 comprises at least one braking valve 20 connectable to the braking system of a trailer. The valve 20 is preferably of the hydraulic type.

The valve 20 comprises at least one internally hollow body 2a,2b with at least one delivery port 3a of the work fluid connectable to a supply pump, at least one discharge port 3b, at least one braking port 3c connectable to the braking system of the trailer and at least one piloting mouth 6a connectable to the braking system of the towing vehicle.

Inside the body 2 are housed sliding at least one braking piston 4 and at least one piloting piston 7a,7b.

The braking piston 4 is moving between an idle configuration and at least a braking configuration in which it is moved towards the braking port 3c with respect to the idle configuration to convey work fluid into the braking system of the trailer. The braking piston 4 is therefore mobile between two end-of-stroke positions, which correspond to the idle configuration and to the end braking configuration, wherein it is positioned at the maximum distance from the idle configuration, passing through a plurality of intermediate braking configurations.

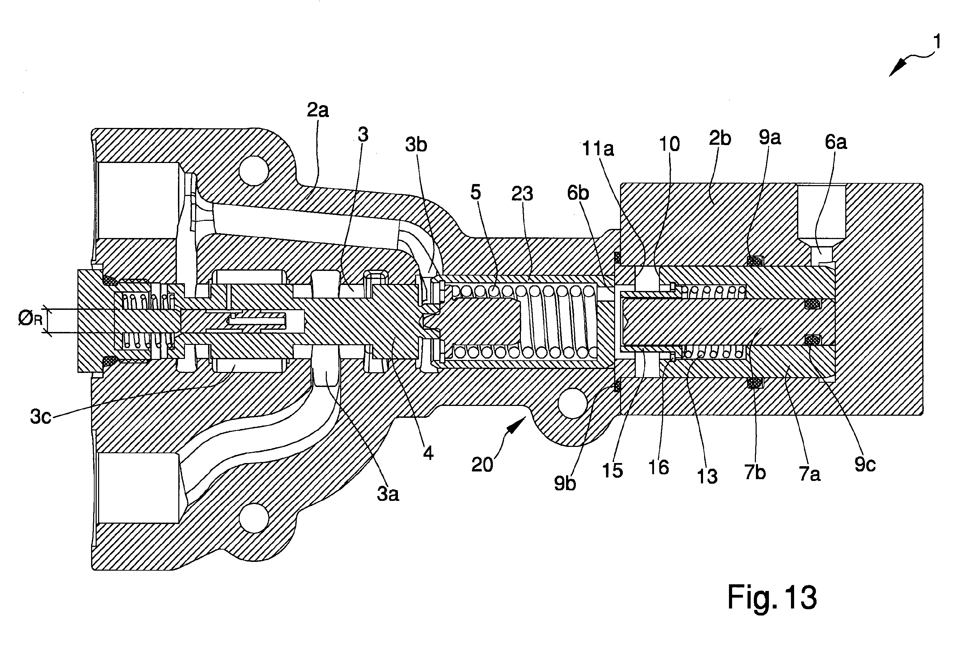

The braking piston has a reaction diameter, identified in figure 13 by the symbol Φ_{R}, communicating with the braking port 3c and on which acts the pressure in the braking system of the trailer.

Inside the body 2a,2b are also main elastic means 5 associated with the braking piston 4. The main elastic means 5 are placed between the piloting piston 7a,7b and the braking piston 4 and are suitable for applying a force on the braking piston 4, on the opposite side to the reaction diameter Φ_{R}, to regulate the braking pressure in a way known to the technician in the sector. More in particular, inside the body 2a,2b is a cup element 23 fitted over the main elastic means 5 and suitable for cooperating with these during the operation of the valve 20 to apply a force on the braking piston 4. The cup element 23 is suitable for transferring the movement of the piloting piston 7a,7b to the main elastic means 5.

The piloting piston 7a,7b is in turn mobile between an idle configuration and a piloting configuration wherein it is moved towards the braking piston 4 with respect to the idle configuration to push the braking piston itself from the relative idle configuration towards a braking configuration. In the piloting configuration, the piloting piston 7a,7b interacts with the braking piston 4, i.e., it acts on the latter either directly or through intermediate elements, such as the main elastic means 5.

During the operation of the valve 20, therefore, the movement of the piloting piston 7a,7b from the idle configuration towards a piloting configuration causes the application, through the main elastic means 5, of a force on the braking piston 4 which causes its movement from the respective idle configuration towards a braking configuration (to the left in the illustrations). Following such shift, the braking port 3c, which in the idle configuration of the braking piston 4 was in communication with the discharge port 3b, is now placed in communication with the delivery port 3a thus causing the pressurization of the braking system of the trailer. The pressure in the braking system of the trailer communicating with the braking port 3c, and therefore also the pressure acting on the reaction diameter Φ_{R}, gradually increases until it is the same as the force applied by the main elastic means 5 on the braking piston 4, thus causing the movement of the latter in a direction opposite to the previous one, so as to close the connection between the braking port 3c and the delivery port 3a. The braking piston 4 thus finds itself in a balanced configuration to which corresponds a substantially constant braking pressure which can be altered by changing the force applied by the piloting piston 7a,7b on the braking piston itself, following which the latter changes its position until it reaches a new balance position. During operation, the braking piston 4 therefore substantially maintains the same position, while the force applied on it by the main elastic means 5 varies and, consequently, so does the braking pressure present in the braking port 3c.

The piloting piston 7a,7b is also mobile between two end-of-stroke positions which correspond to the idle configuration, wherein it is placed in correspondence to the piloting mouth 6a, and to the end piloting configuration, wherein it is located at the maximum distance from the piloting mouth 6a, passing through a plurality of intermediate piloting configurations.

Suitably, inside the body 2a,2b first sealing means 9a are provided suitable for insulating the ports 3a, 3b, 3c from the piloting mouth 6a. More in particular, the first sealing means 9a are placed between the piloting piston 7a,7b and the body 2a,2b so as to define, inside the body 2a,2b, a braking chamber 3 and a piloting chamber 6 insulated the one from the other. In particular, the area of the chamber 3 inside which are housed the main elastic means 5 and the cup element 23 is placed in communication with the discharge port 3b and the pressure inside it is substantially the same as the atmospheric pressure. The piloting chamber 6 is in turn in communication with the piloting mouth 6a. The piloting piston 7a,7b protrudes at least in part inside the piloting chamber 6. The braking piston 4 therefore moves inside the braking chamber 3, while the braking piston 7a, 7b moves inside the braking chamber 3 and the piloting chamber 6.

In the embodiments shown in the illustrations, the piloting chamber 6 has a bottom wall 8 against which rests the piloting piston 7a,7b in its idle configuration, and near which is defined the piloting mouth 6a.

In the embodiment shown in the illustrations, the body 2a,2b comprises a braking body 2a, suitable for containing the braking piston 4, and a piloting body 2b, suitable for containing the piloting piston 7a,7b at least in its idle configuration, distinct and associated integral with one another. Between the braking body 2a and the piloting body 2b second sealing means 9b are placed. According to the invention, the piloting piston 7a,7b comprises at least a first and a second portion 7a and 7b having respective thrust areas mobile the one with respect to the other, along at least one section of the stroke of the piloting piston 7a,7b, to change the intensity of the force acting on the braking piston 4. Suitably, the portions 7a and 7b are both suitable for moving, integrally or reciprocally, for at least a first section of the stroke of the piloting piston 7a,7b, during which the total working area, on which the pressure present in the piloting chamber 6 acts, corresponds to the sum of the working areas of the two portions 7a and 7b, and are suitable for moving reciprocally the one with respect to the other, one of the two being stopped, along a further section of the stroke of the piloting piston 7a,7b, during which the working area on which the pressure present in the piloting chamber 6 acts corresponds to the working area of the portion 7a, 7b in movement. The portions 7a, 7b can therefore have the same or different working areas.

Advantageously, the first and the second portion 7a, 7b are associated sliding the one with respect to the other.

Preferably, the first and the second portion 7a, 7b have a first and a second diameter Φ₁ and Φ₂ respectively, different from one another and facing the piloting mouth 6a. The first and the second portion 7a and 7b therefore define two relative thrust areas facing the piloting mouth 6a and having external diameter Φ₁ and Φ₂ respectively.

By the term "piloting piston stroke" is meant the movement of the first portion 7a and/or of the second portion 7b. More in detail, the end-of-stroke configurations of the piloting piston 7a,7b correspond to the most extreme end-of-stroke positions between those of the first and of the second portion 7a and 7b.

Between the first and the second portion 7a and 7b are placed third sealing means 9c. The volume between the first opening 6a and the piloting piston 7a,7b is thus isolated from the braking chamber 3.

Advantageously, the first portion 7a has a substantially toroid shape and the second portion 7b has a substantially cylindrical shape. More in detail, the second portion 7b is fitted sliding inside the first portion 7a and the second diameter Φ₂ is smaller than the first diameter Φ₁.

The first portion 7a is therefore fitted coaxially over the second portion 7b, which is free to slide with respect to the first portion itself in both directions.

In an alternative embodiment, not shown in the illustrations, the first and the second portion 7a and 7b are arranged substantially parallel to one another.

The working stroke of the first portion 7a is shorter than the working stroke of the second portion 7b, where by "working stroke" is meant the section of the stroke during which the portions 7a and 7b transmit a force to the braking piston 4. Preferably, the first and the second portion 7a and 7b take on the same position in the idle configuration, while they have two different end-of-stroke positions in moving away from the piloting mouth 6a, where the end-of-stroke position of the second portion 7b is assumed to correspond to the end-of-stroke position of the piloting piston 7a,7b.

More in particular, the first portion 7a has at least a first reference surface 10 suitable for resting, during its stroke towards the braking piston 4, against a first stop surface 11 a defined by the piloting body 2b. More in detail, the first stop surface 11a defines a narrowing gap 6b in correspondence to the braking chamber 3.

The first stop surface 11 a therefore defines the end-of-stroke position of the first portion 7a, while the second portion 7b is suitable for crossing the narrowing gap 6b to apply a further thrust action on the braking piston 4. More in detail, the second portion 7b is designed to contact the cup element 23 in its away stroke from the piloting mouth 6a and its end-of-stroke position in this direction corresponds to the end-of-stroke position of the cup element 23 towards the braking port 3c.

As can be seen in the figures from 1 to 13, the first diameter and the second diameter Φ₁ and Φ₂ are bigger and smaller than the narrowing gap 6b diameter respectively.

The body 2a,2b also defines a second stop surface 11b suitable for substantially delimiting the idle configuration of the braking piston 4, thus defining its end-of-stroke position. More in detail, the cup element 23 rests against the second stop surface 11b in the idle configuration of the braking piston 4.

As shown in the illustrations, the first stop surface 11a is placed between the second stop surface 11b and the piloting mouth 6a.

Described below in detail are the three embodiments shown in the figures from 1 to 13.

The first embodiment of the device 1 is shown in the figures from 1 to 4. Advantageously, in this first embodiment, the first reference surface 10 defined by the first portion 7a is placed between the extremities of the first portion itself.

Suitably, the extremity area of the first portion 7a turned towards the braking piston 4 defines a second reference surface 12 suitable for resting against the braking piston itself passing through the narrowing gap 6b in its away stroke from the piloting mouth 6a.

More in detail, in the particular embodiment represented in the figures, the extremity area defining the second reference surface 12 has a third diameter Φ₃ smaller than the first diameter of and bigger than the second diameter Φ₂.

In the first embodiment, the first and the second portion 7a and 7b have substantially the same axial length.

The second and the third embodiment are represented in the figures from 5 to 8 and from 9 to 13 respectively.

Advantageously, the device 1 relating to the second and third embodiment comprises piloting elastic means 13 associated with at least one between the first and the second portion 7a and 7b and suitable for interacting with the braking piston 4 during the stroke of the first and/or the second portions themselves towards a piloting configuration. The piloting elastic means 13 are therefore suitable for applying an additional force on the braking piston 4. Preferably, but not exclusively, the piloting elastic means 13 have a lower rigidity than that of the main elastic means 5.

Suitably, the piloting elastic means 13 are placed between the first and the second portions 7a and 7b and have at least one extremity associated integral with the first portion 7a.

More in particular, the first portion 7a has an annular recess, defined in correspondence to its inner diameter, suitable for housing the piloting elastic means 13, the latter being made up e.g. of a helical spring fitted over the second portion 7b.

As shown in the figures from 5 to 13, in the second and the third embodiment of the device 1, the first reference surface 10 corresponds to the extremity of the first portion 7a turned towards the braking piston 4 and the first portion itself also defines a third reference surface 14 placed between its extremity areas. More in detail, the piloting elastic means 13 have a first extremity associated with the third reference surface 14 and a second extremity, opposite the first extremity, intended to interact with the braking piston 4.

Preferably, at the second extremity of the piloting elastic means 13 is associated at least one spacer element 15 suitable for interacting with the braking piston 4 during the stroke of the piloting piston 7a,7b towards a piloting configuration. More in detail, the spacer element 15 is suitable for contacting the cup element 23 during the stroke of the first portion 7a from the idle configuration towards a piloting configuration.

The piloting elastic means 13 are mobile between a first position, corresponding to the configuration they take on when they do not interact with the braking piston 4, and at least a second position in which, with the spacer element 15 resting against the cup element 23, they are compressed with respect to the first position due to the relative movement of the first portion 7a with respect to the second portion 7b towards the braking piston itself.

The second and the third embodiment of the device 1 differ from one another in terms of the different configuration taken on by the piloting elastic means 13 in the relative first positions.

More in detail, in the second embodiment shown in the figures from 5 to 8, the second extremity of the piloting elastic means 13 is free and the configuration taken on by the latter in the relative first position corresponds to idle configuration.

In the third embodiment shown in the figures from 9 to 12 and 13, the piloting elastic means 13 are pre-compressed. In this embodiment, therefore, the piloting elastic means 13 are pre-compressed in their first position.

More in particular, the device 1 comprises a reference element 16, associated integral with the first portion 7a and opposite the third reference surface 14, which is suitable for cooperating with the piloting elastic means 13 to define the initial position of their second extremity.

Below, the operation of the device according to the invention is described in the three described embodiments.

In normal running conditions of the towing vehicle and the trailer, the braking piston 4 and the piloting piston 7a,7b are in their respective idle configurations. When the operator presses the brake pedal of the towing vehicle, fluid under pressure is conveyed into the braking system of the towing vehicle itself and, consequently, inside the piloting body 2b of the valve 20.

More in particular, such fluid enters the piloting chamber 6 and occupies the volume between the piloting piston 7a,7b and the bottom wall 8.

In the first embodiment shown in the figures from 1 to 4, the stroke of the piloting piston 7a,7b comprises at least one first section wherein, following the increase in pressure in the piloting chamber 6, the first and the second portion 7a and 7b move integrally the one with the other towards the braking piston 4 until the first reference surface 10 rests against the first stop surface 11a. During this first section, the second reference surface 12 and the extremity of the second portion 7b cross the narrowing gap 6b and contact the cup element 23, pushing it towards the braking piston 4 and thus causing the compression of the main elastic means 5, which therefore increase the thrust applied on the braking piston itself. The braking piston 4 consequently moves to the right in the illustrations, putting the braking port 3c in communication with the delivery port 3a.

During this first section of stroke of the piloting piston 7a,7b, the pressure in the braking system of the trailer connected to the braking port 3c increases as shown by line 17 of the diagram in figure 15. The line 17 shows a fast increase in pressure in the braking system of the trailer due to the fact that during the first section of the stroke of the piloting piston 7a,7b, the area on which the pressure of the work fluid acts is that relating to the first diameter Φ₁ and, therefore, the greatest available area. During this first section of stroke, the pressure in the braking system quickly increases with the increase in pressure in the piloting chamber 6 by effect of the high piloting ratio, i.e., the high ratio between the diameter of the piloting piston 7a,7b which acts on the main elastic means 5 (and which corresponds in this section to Φ₁) and the reaction diameter Φ_{R}.

Upon the first reference surface 10 contacting the first stop surface 11a, the first portion 7a terminates its stroke.

At this point, the movement of the cup element 23 stops, just like the increase in pressure in the braking system of the trailer, inasmuch as the reduction of the total working area of the piloting piston 7a,7b, which now corresponds to that relating to the second diameter Φ₂, does not allow further compressing the main elastic means 5.

This operating situation is shown by the line 18 of the diagram in figure 15. The stroke of the piloting piston 7a,7b then comprises a second section corresponding to the stroke of the second portion 7b towards the braking piston 4 only, during which the second portion 7b, with respect to the first portion 7a slides away from the piloting mouth 6a. The stroke of the second portion 7b starts again when the pressure in the piloting chamber 6 has increased to an extent that the force applied by the second portion itself is enough to further compress the main elastic means 5. The increase in force applied by the main elastic means 5 results in the reaching of a new balance position of the braking piston 4, which initially moves to again open the connection between the delivery port 3a and the braking port 3c, thus causing a pressure increase in the braking system of the trailer, and then closing this communication once the force applied in the opposite direction by means of the reaction diameter Φ_{R} is the same as that applied by the main elastic means 5.

This operating situation is represented by the line 19 of the diagram in figure 15. As can be seen, the line 19 is less sloped than the line 17, thus indicating, during the second above-mentioned section, a less sudden pressure increase in the braking system of the trailer along with the pressure increase in the piloting chamber 6 with respect to the first section of the stroke of the piloting piston 7a,7b. As has been said, this is due to the fact that the thrust surface of the piloting piston 7a,7b, and therefore the above-mentioned piloting ratio, drops between the first and the second section of the relative stroke.

The stroke of the second portion 7b stops when the braking piston 4, and more in particular the cup element 23, reaches the relative end-of-stroke position.

At this point, the pressure in the braking system of the trailer remains stable with the pressure increase in the piloting chamber 6.

A description will now be given of the second and the third embodiment of the device 1 according to the invention.

Initially, in the second and the third embodiment, as a result of the work fluid having entered the piloting chamber 6 and of the relative pressure increase, the first and the second portion 7a and 7b move towards the piloting configuration, moving the extremity of the second portion 7b and of the spacer element 15 towards the braking piston 4. More in detail, the second portion 7b and the spacer element 15 are suitable for contacting the cup element 23. During this phase, relative movement can exist between the first and the second portions 7a and 7b due to the alignment of the extremity of the second portion 7b with the extremity of the spacer element 15.

In the second embodiment, because the force initially applied by the piloting elastic means 13 is substantially nil, during the first section of the stroke of the piloting piston 7a,7b there is relative movement between the first portion 7a and the second portion 7b. In particular, the first portion 7a moves with respect to the second portion 7b so as to compress the piloting elastic means 13 to gradually increase the force these apply on the main elastic means 5 by means of the spacer element 15.

In the third embodiment, instead, during the first section of stroke of the piloting piston 7a,7b, because the piloting elastic means 13 are pre-compressed and therefore able to immediately apply a force on the main elastic means 5, the first portion 7a and the second portion 7b move integrally the one with the other until the force applied by the first portion 7a on the piloting elastic means 13 exceeds their compression force.

During this first section of stroke, represented in the diagram of figure 16 by the line 21, the force applied by the piloting piston 7a,7b and by the piloting elastic means 13 is such as to gradually compress the main elastic means 5 causing a pressure increase in the braking system of the trailer.

The first section of stroke of the piloting piston 7a,7b terminates when the first reference surface 10 rests against the first stop surface 11a. In this configuration, the force applied by the piloting elastic means 13 reaches its maximum intensity.

At this point then, a second section begins of the stroke of the piloting piston 7a,7b during which the further compression of the main elastic means 5 is due to the sole increase in pressure in the piloting chamber 6, which translates into the relative movement of the second portion 7b away from the piloting mouth 6a.

This second section is represented in the diagram in figure 16 by the line 22 which, as can be seen, is less sloped than the line 21 relating to the first aforementioned section. In this case as well, the lesser slope of the line 22 indicates that the pressure in the braking system of the trailer is rising less quickly along with the increase in pressure in the piloting chamber 6 compared to the first section of the stroke identified by the line 21; this is due to the fact that the thrust surface of the piloting piston 7a,7b now corresponds to that of the second portion 7b only, and consequently the piloting ratio has dropped with respect to the first section described above.

In the second and in the third embodiment, the presence of the piloting elastic means 13 allows obtaining a constant pressure increase in the braking system of the trailer along with the rise in piloting pressure, without the stall situation occurring represented by the line 18 of the diagram of figure 15 relating to the first solution described above.

As the diagram in figure 16 shows, upon the braking piston 4 reaching the end-of-stroke position corresponding to the final braking configuration, the pressure inside the braking chamber remains stable with the rise in pressure in the piloting chamber 6.

It has in fact been ascertained how the described invention achieves the proposed objects and in particular the fact is underlined that the device according to the invention, by means of the use of a piloting piston having two different thrust diameters, allows obtaining a quick response of the braking system of the trailer when the braking system of the towing vehicle is operated and, at the same time, a gradual modulation of the braking force on the trailer itself.

More in particular, the first diameter permits reducing the response time of the braking system of the trailer with respect to known devices, while the reduced stroke of the first portion and the bigger one of the second portion of smaller diameter allows obtaining gradual braking.

Again, the presence of the piloting elastic means allows obtaining a constant and continuous increase in the braking pressure of the trailer along with the increase in pressure in the piloting chamber.

Not least, the use of pre-compressed piloting elastic means allows limiting the volume of oil used for piloting.

## Claims

1. Device (1) for braking a trailer, comprising:
a braking valve (20) which can be connected to the braking system of a trailer and having
an internally hollow containment body (2a, 2b) which has at least a delivery port (3a) of a work fluid, at least a discharge port (3b) of the work fluid, at least a braking port (3c) connectable to the braking system of the trailer and at least a piloting mouth (6a) connectable to the braking system of the towing vehicle,
wherein inside said body (2a, 2b) are housed sliding
at least a braking piston (4), moving between an idle configuration and at least a braking configuration in which it is moved with respect to the idle configuration to convey a work fluid to the braking system of the trailer, main elastic means (5) being provided acting on said braking piston (4);
and a piloting piston (7a, 7b) moving, due to the pressure present in the braking system of the vehicle, between an idle configuration and a piloting configuration in which it is moved towards said braking piston (4) to push it towards a braking configuration (3c);
**characterized by** the fact that said piloting piston (7a, 7b) has at least a first and
a second portion (7a, 7b) with respective thrust areas and moving the one with respect to the other to apply forces of different intensity on said braking piston (4).

2. Device (1) according to claim 1, **characterized by** the fact that said first and second portions (7a, 7b) are both suitable for moving along at least a first section of the stroke of said piloting piston (7a, 7b) from the idle configuration towards a piloting configuration and are suitable for moving reciprocally the one with respect to the other, one of the two being stopped, along at least a second section of said stroke of the piloting piston (7a, 7b).

3. Device (1) according to claim 1 or 2, **characterized by** the fact that said first and second portions (7a, 7b) have a first and a second diameter (Φ₁, Φ₂), respectively, which are different from one another.

4. Device (1) according to claims 2 and 3, **characterized by** the fact that said second portion (7b) is fitted sliding inside said first portion (7a), said second diameter (Φ₂) being smaller than said first diameter (Φ₁).

5. Device (1) according to one or more of the claims from 2 to 4, **characterized by** the fact that said second portion (7b) moves bi-directionally with respect to said first portion (7a).

6. Device (1) according to one or more of the preceding claims, **characterized by** the fact that the extension of the working stroke of said first portion (7a) is shorter than the extension of the stroke of said second portion (7b).

7. Device (1) according to one or more of the preceding claims, **characterized by** the fact that said first portion (7a) has at least a first reference surface (10) suitable for resting against a first stop surface (11a) defined by said body (2a, 2b), said first stop surface (11a) delimiting the end-of-stroke position of the first portion itself moving away from the piloting mouth (6a) and being placed between the latter and a second stop surface (11b) defined by said body (2a, 2b) to delimit the idle configuration of said braking piston (4).

8. Device (1) according to one or more of the preceding claims, **characterized by** the fact that said first reference surface (10) is placed between the extremity areas of said first portion (7a) and that the extremity of the latter turned towards said braking piston (4) defines a second reference surface (12) suitable for resting against the braking piston itself.

9. Device (1) according to one or more of the claims from 1 to 7, **characterized by** the fact that it comprises piloting elastic means (13) associated with said piloting piston (7a, 7b) and suitable for interacting with said braking piston (4) during the stroke of the piloting piston itself from the idle configuration towards a piloting configuration, said piloting elastic means (13) being suitable for applying an additional force on the braking piston itself.

10. Device (1) according to claim 9, **characterized by** the fact that said first portion (7a) has at least a third reference surface (14) placed between its extremity areas and by the fact that said piloting elastic means (13) comprise at least a first extremity arranged resting against said third reference surface (14) and a second extremity intended to interact with said braking piston (4).

11. Device (1) according to claim 9 or 10, **characterized by** the fact that said piloting elastic means (13) are positioned between said first and said second portions (7a, 7b).

12. Device (1) according to one or more of the claims from 9 to 11, **characterized by** the fact that it comprises at least a spacer element (15) associated with said second extremity of the piloting elastic means (13) and suitable for interacting with said braking piston (4) during the stroke of said piloting piston (7a, 7b) from the idle configuration towards a piloting configuration.

13. Device (1) according to one or more of the claims from 9 to 12, **characterized by** the fact that said piloting elastic means (13) are mobile between a first position, corresponding to the configuration they take on when they do not interact with said braking piston (4), and at least a second position in which, due to the interaction of said spacer element (15) with said braking piston (4), are compressed with respect to said first position due to the movement of said first portion (7a) with respect to said second portion (7b) towards said braking piston (4).

14. Device (1) according to one or more of the claims from 9 to 13, **characterized by** the fact that said piloting elastic means (13) are pre-compressed.

15. Device (1) according to claim 14, **characterized by** the fact that it comprises at least a reference element (16) associated integral with said first portion (7a) and opposite said third reference surface (14), said reference element (16) being suitable for cooperating with said piloting elastic means (13) to defme the initial position of their second extremity.

16. Device (1) according to one or more of the preceding claims, **characterized by** the fact that said braking valve (20) is of the hydraulic type.

## Patentansprüche

1. Vorrichtung (1) zum Bremsen eines Anhängers, umfassend:
ein Bremsventil (20), das mit dem Bremssystem eines Anhängers verbunden werden kann, und aufweist
einen innen hohl ausgeführten Aufnahmekörper (2a, 2b), der zumindest eine Eintritts-Öffnung (3a) für ein Arbeitsfluid, zumindest eine Austritts-Öffnung (3b) für ein Arbeitsfluid, zumindest eine Brems-Öffnung (3c), die mit dem Bremssystem des Anhängers verbindbar ist, sowie zumindest eine Ansteuer-Mündung (6a), die mit dem Bremssystem des Abschleppfahrzeugs verbindbar ist, aufweist, wobei in diesem Körper (2a, 2b) verschiebbar aufgenommen sind
zumindest ein Bremskolben (4), der sich zwischen einer Leerlaufstellung und zumindest einer Bremsstellung bewegt, in der er in Bezug auf die Leerlaufstellung bewegt ist, um ein Arbeitsfluid in das Bremssystem des Anhängers zu fördern, wobei elastische Mittel vorgesehen sind, die den Bremskolben (4) beaufschlagen,
sowie ein Steuerkolben (7a, 7b), der sich aufgrund des Drucks in dem Bremssystem des Fahrzeugs zwischen einer Leerlaufstellung und einer Steuerstellung bewegt, in der er auf den Bremskolben (4) zu bewegt wird, um diesen in eine Bremsstellung (3c) zu drücken,
**dadurch gekennzeichnet, dass** der Steuerkolben (7a, 7b) zumindest einen ersten und einen zweiten Abschnitt (7a, 7b) mit entsprechenden Schubbereichen aufweist, die sich relativ zueinander bewegen, um Kräfte unterschiedlicher Intensität auf den Bremskolben (4) auszuüben.

2. Vorrichtung (1) gemäß Anspruch 1, **dadurch gekennzeichnet, dass** die ersten und zweiten Abschnitte (7a, 7b) beide dazu ausgelegt sind, sich entlang zumindest eines ersten Hubabschnitts des Steuerkolbens (7a, 7b) von der Leerlaufstellung in eine Steuerstellung zu bewegen und sich relativ zueinander, entlang zumindest eines zweiten Hubabschnitts des Steuerkolbens (7a, 7b) hin- und herzubewegen, wobei einer der beiden angehalten wird.

3. Vorrichtung (1) gemäß Anspruch 1 oder 2, **dadurch gekennzeichnet, dass** die ersten und zweiten Abschnitte (7a, 7b) einen ersten bzw. einen zweiten Durchmesser (Φ₁, Φ₂) aufweisen, die unterschiedlich voneinander sind.

4. Vorrichtung (1) gemäß Anspruch 2 und 3, **dadurch gekennzeichnet, dass** der zweite Abschnitt (7b) verschiebbar in dem ersten Abschnitt (7a) aufgenommen ist, wobei der zweite Durchmesser (Φ₂) kleiner ist als der erste Durchmesser (Φ₁).

5. Vorrichtung (1) gemäß einem oder mehreren der Ansprüche 2 bis 4, **dadurch gekennzeichnet, dass** der zweite Abschnitt (7b) sich in zwei Richtungen in Bezug auf den ersten Abschnitt (7a) bewegt.

6. Vorrichtung (1) gemäß einem oder mehreren der vorigen Ansprüche, **dadurch gekennzeichnet, dass** die Erstreckung des Arbeitshubs des ersten Abschnitts (7a) kürzer ist als die Erstreckung des Hubs des zweiten Abschnitts (7b).

7. Vorrichtung (1) gemäß einem oder mehreren der vorigen Ansprüche, **dadurch gekennzeichnet, dass** der erste Abschnitt (7a) zumindest eine erste Referenzfläche (10) aufweist, die zur Anlage gegen eine erste, durch den Körper (2a, 2b) definierte Anschlagsfläche (11a) ausgebildet ist, wobei die erste Anschlagsfläche (11a) die Endlagen-Position des ersten Abschnitts begrenzt, der sich von der Steuermündung (6a) wegbewegt und zwischen letzterer und einer zweiten, durch den Körper (2a, 2b) definierten Anschlagsfläche (11b) angeordnet ist, um die Leerlaufstellung des Bremskolbens (4) zu begrenzen.

8. Vorrichtung (1) gemäß einem oder mehreren der vorigen Ansprüche, **dadurch gekennzeichnet, dass** die erste Referenzfläche (10) zwischen den Endbereichen des ersten Abschnitts (7a) angeordnet ist und dass das dem Bremskolben (4) zugewandte Ende des ersten Abschnitts (7a) eine zweite Referenzfläche (12) definiert, die zur Anlage gegen den Bremskolben selbst bestimmt ist.

9. Vorrichtung (1) gemäß einem oder mehreren der Ansprüche 1 bis 7, **dadurch gekennzeichnet, dass** sie elastische Steuermittel (13) umfasst, die dem Steuerkolben (7a, 7b) zugeordnet und dazu ausgelegt sind, mit dem Bremskolben (4) während des Hubs des Steuerkolbens von der Leerlaufstellung in eine Steuerstellung zusammenzuwirken, wobei die elastischen Steuermittel (13) dazu ausgelegt sind, eine zusätzliche Kraft auf den Bremskolben auszuüben.

10. Vorrichtung (1) gemäß Anspruch 9, **dadurch gekennzeichnet, dass** der erste Abschnitt (7a) zumindest eine dritte Referenzfläche (14) aufweist, die zwischen dessen Endabschnitten angeordnet ist, und dadurch, dass die elastischen Steuermittel (13) zumindest ein erstes Ende aufweisen, das so angeordnet ist, dass es gegen die dritte Referenzfläche (14) anliegt, sowie ein zweites Ende, das dazu bestimmt ist, mit dem Bremskolben (4) zusammenzuwirken.

11. Vorrichtung (1) gemäß Anspruch 9 oder 10, **dadurch gekennzeichnet, dass** die elastischen Steuermittel (13) zwischen den ersten und den zweiten Abschnitten (7a, 7b) angeordnet sind.

12. Vorrichtung (1) gemäß einem oder mehreren der Ansprüche 9 bis 11, **dadurch gekennzeichnet, dass** sie zumindest ein Abstandselement (15) umfasst, das dem zweiten Ende der elastischen Steuermittel (13) zugeordnet ist und dazu ausgelegt ist, mit dem Bremskolben (4) während dem Hub des Steuerkolbens (7a, 7b) von der Leerlaufstellung in eine Steuerstellung zusammenzuwirken.

13. Vorrichtung (1) gemäß einem oder mehreren der Ansprüche 9 bis 12, **dadurch gekennzeichnet, dass** die elastischen Steuermittel (13) beweglich sind zwischen einer ersten Position, die der Stellung entspricht, die sie einnehmen, wenn sie nicht mit dem Bremskolben (4) zusammenwirken, und zumindest einer zweiten Position, in der sie aufgrund des Zusammenwirkens des Abstandselements (15) mit dem Bremskolben (4) in Bezug auf die erste Position aufgrund der Bewegung des ersten Abschnitts (7a) relativ zum zweiten Abschnitt (7b) in Richtung des Bremskolbens (4) komprimiert werden.

14. Vorrichtung (1) gemäß einem oder mehreren der Ansprüche 9 bis 13, **dadurch gekennzeichnet, dass** die elastischen Steuermittel (13) vorkomprimiert sind.

15. Vorrichtung (1) gemäß Anspruch 14, **dadurch gekennzeichnet, dass** sie zumindest ein Referenzelement (16) umfasst, das einstückig mit dem ersten Abschnitt (7a) verbunden ist und der dritten Referenzfläche (14) gegenüberliegt, wobei das Referenzelement (16) dazu ausgelegt ist, mit den elastischen Steuermitteln (13) zur Definition der Ausgangsposition für deren zweites Ende zusammenzuwirken.

16. Vorrichtung (1) gemäß einem oder mehreren der vorigen Ansprüche, **dadurch gekennzeichnet, dass** das Bremsventil (20) ein hydraulisches Bremsventil ist.

## Revendications

1. Dispositif (1) de freinage pour une remorque, comprenant :
une vanne de freinage (20) qui peut être reliée au système de freinage d'une remorque,
et comportant :
un corps de confinement (2a, 2b) dont l'intérieur est creux, qui comporte au moins un orifice (3a) de distribution d'un fluide de travail, au moins un orifice d'évacuation (3b) du fluide de travail, au moins un orifice de freinage (3c) qui peut être relié au système de freinage de la remorque et au moins une bouche de pilotage (6a) qui peut être reliée au système de freinage du véhicule de remorquage,
dans lequel sont logés de manière coulissante, à l'intérieur dudit corps (2a, 2b) :
au moins un piston de freinage (4), se déplaçant entre une configuration de repos et
au moins une configuration de freinage dans laquelle il est déplacé par rapport à la configuration de repos pour acheminer un fluide de travail jusqu'au système de freinage de la remorque, des moyens élastiques principaux (5) étant prévus pour agir sur ledit piston de freinage (4) ;
et un piston de pilotage (7a, 7b) se déplaçant, en raison de la pression présente dans le système de freinage du véhicule, entre une configuration de repos et une configuration de pilotage dans laquelle il est déplacé vers ledit piston de freinage (4) pour le pousser vers une configuration de freinage (3c) ;
**caractérisé par le fait que** ledit piston de pilotage (7a, 7b) comporte au moins une première partie et une deuxième partie (7a, 7b) avec des surfaces de poussée respectives et se déplaçant l'une par rapport à l'autre pour appliquer des forces d'intensité différente sur ledit piston de freinage (4).

2. Dispositif (1) selon la revendication 1, **caractérisé par le fait que** lesdites première et deuxième parties (7a, 7b) sont toutes deux aptes à se déplacer le long d'au moins une première section de la course dudit piston de pilotage (7a, 7b) de la configuration de repos à une configuration de pilotage, et sont aptes à un déplacement réciproque de l'une par rapport à l'autre, l'une des deux étant à l'arrêt, le long d'au moins une deuxième section de ladite course du piston de pilotage (7a, 7b).

3. Dispositif (1) selon la revendication 1 ou 2, **caractérisé par le fait que** lesdites première et deuxième parties (7a, 7b) ont un premier et un deuxième diamètre (Φ₁, Φ₂), respectivement, qui sont différents l'un de l'autre.

4. Dispositif (1) selon les revendications 2 et 3, **caractérisé par le fait que** ladite deuxième partie (7b) est ajustée de manière coulissante à l'intérieur de ladite première partie (7a), ledit deuxième diamètre (Φ₂) étant plus petit que ledit premier diamètre (Φ₁).

5. Dispositif (1) selon une ou plusieurs des revendications 2 à 4, **caractérisé par le fait que** ladite deuxième partie (7b) se déplace de manière bidirectionnelle par rapport à ladite première partie (7a).

6. Dispositif (1) selon une ou plusieurs des revendications précédentes, **caractérisé par le fait que** l'étendue de la course de travail de ladite première partie (7a) est plus courte que l'étendue de la course de ladite deuxième partie (7b).

7. Dispositif (1) selon une ou plusieurs des revendications précédentes, **caractérisé par le fait que** ladite première partie (7a) a au moins une première surface de référence (10) apte à être en appui contre une première surface d'arrêt (11a) définie par ledit corps (2a, 2b), ladite première surface d'arrêt (11a) délimitant la position de fin de course de la première partie en train de s'éloigner elle-même de la bouche de pilotage (6a) et étant placée entre cette dernière et une deuxième surface d'arrêt (11b) définie par ledit corps (2a, 2b) pour délimiter la configuration de repos dudit piston de freinage (4).

8. Dispositif (1) selon une ou plusieurs des revendications précédentes, **caractérisé par le fait que** ladite première surface de référence (10) est située entre les surfaces d'extrémité de ladite première partie (7a) et que l'extrémité de cette dernière, tournée vers ledit piston de freinage (4), définit une deuxième surface de référence (12) apte à être en appui contre le piston de freinage lui-même.

9. Dispositif (1) selon une ou plusieurs des revendications 1 à 7, **caractérisé par le fait qu'**il comprend des moyens élastiques de pilotage (13) associés audit piston de pilotage (7a, 7b) et aptes à interagir avec ledit piston de freinage (4) pendant la course du piston de pilotage lui-même de la configuration de repos vers une configuration de pilotage, lesdits moyens élastiques de pilotage (13) étant aptes à appliquer une force additionnelle sur le piston de freinage lui-même.

10. Dispositif (1) selon la revendication 9, **caractérisé par le fait que** ladite première partie (7a) comporte au moins une troisième surface de référence (14) située entre ses surfaces d'extrémité et **par le fait que** lesdits moyens élastiques de pilotage (13) comprennent au moins une première extrémité disposée en appui contre ladite troisième surface de référence (14) et une deuxième extrémité destinée à interagir avec ledit piston de freinage (4).

11. Dispositif (1) selon la revendication 9 ou 10, **caractérisé par le fait que** lesdits moyens élastiques de pilotage (13) sont situés entre lesdites première et deuxième parties (7a, 7b).

12. Dispositif (1) selon une ou plusieurs des revendications 9 à 11, **caractérisé par le fait qu'**il comprend au moins un élément d'espacement (15) associé à ladite deuxième extrémité des moyens élastiques de pilotage (13) et apte à interagir avec ledit piston de freinage (4) pendant la course dudit piston de pilotage (7a, 7b) de la configuration de repos vers une configuration de pilotage.

13. Dispositif (1) selon une ou plusieurs des revendications 9 à 12, **caractérisé par le fait que** lesdits moyens élastiques de pilotage (13) sont mobiles entre une première position, correspondant à la configuration qu'ils occupent lorsqu'ils n'interagissent pas avec ledit piston de freinage (4), et au moins une deuxième position dans laquelle, en raison de l'interaction dudit élément d'espacement (15) avec ledit piston de freinage (4), ils sont comprimés par rapport à ladite première position du fait du mouvement de ladite première partie (7a) par rapport à ladite deuxième partie (7b) vers ledit piston de freinage (4).

14. Dispositif (1) selon une ou plusieurs des revendications 9 à 13, **caractérisé par le fait que** lesdits moyens élastiques de pilotage (13) sont pré-comprimés.

15. Dispositif (1) selon la revendication 14, **caractérisé par le fait qu'**il comprend au moins un élément de référence (16) associé, en en faisant partie intégrante, à ladite première partie (7a) et opposé à ladite troisième surface de référence (14), ledit élément de référence (16) étant apte à coopérer avec lesdits moyens élastiques de pilotage (13) pour définir la position initiale de leur deuxième extrémité.

16. Dispositif (1) selon une ou plusieurs des revendications précédentes, **caractérisé par le fait que** ladite vanne de freinage (20) est de type hydraulique.
